# EUROPEAN PATENT APPLICATION

(11) **EP 4 657 253 A1**
(43) Date of publication of application: **03.12.2025**
(21) Application number: 24847512.1
(22) Date of filing: 24.01.2024
(51) Int. Cl.: G06F 9/455, G06F 9/48, G06F 9/50

(54) **RUNTIME VIRTUAL MACHINE SYSTEM, AND SYSTEM RUNNING METHOD AND APPARATUS**

(30) Priority: 28.07.2023 CN 202310943023
(71) Applicant: Jingdong Technology Information Technology Co., Ltd., Beijing 100176 (CN)
(72) Inventor: MENG, Xiangbin, Beijing 100176 (CN)
(74) Representative: Böckmann genannt Dallmeyer, Georg Nikolas
(86) International application number: PCT/CN2024/073804
(87) International publication number: WO 2025/025543

(57) **Abstract**

A runtime virtual machine system. The system comprises: a user mode application program (101); an asynchronous IO model (102), which is used for sharing an IO request memory queue between the us er mode application program (101) and a kernel mode; and a dynamic runtime library (103), which can be loaded when the user mode application program (101) is started, wherein the dynamic runtime libra ry (103) is used for generating, after being loaded, a runtime virtual environment for replacing a runtim e environment of the user mode application program (101), the dynamic runtime library (103) comprise s an IO operation library function hook (1031) and a monitoring thread function (1032), the IO operatio n library function hook (1031) is constructed on the basis of a native library function of the user mode application program (101), and the IO operation library function is used for adapting an application pro gram interface of the native library function and the asynchronous IO model (102) in the runtime virtual environment, such that an IO operation of an operating system where the user mode application progr am (101) is located is transformed to be processed by the asynchronous IO model (102).

## Description

### CROSS-REFERENCE TO RELATED APPLICATIONS

The present application claims priority to Chinese Patent Application No. 202310943023.5, which was filed on July 28, 2023 and entitled "Runtime Virtual Machine System, System Running Method and Apparatus", the content of which is hereby incorporated by reference in its entirety.

### TECHNICAL FIELD

The present disclosure relates to the field of computer technology, and specifically to a runtime virtual machine system, a system running method and apparatus, an electronic device, and a computer-readable medium.

### BACKGROUND

The existing runtime virtual machine technology is generally developed based on a C runtime library. Various operating systems provide encapsulation of system calls through the C runtime library. Applications executed in various runtime virtual machine environments actually need to implement underlying IO operations by calling the system calls of the host operating system. However, compared with a user mode code, the cost of executing system calls is extremely high.

### SUMMARY

The embodiments of the present disclosure propose a thread virtualization method and apparatus, a runtime virtual machine system, an electronic device, and a computer-readable medium.

In a first aspect, an embodiment of the present disclosure provides a runtime virtual machine system, which includes: a user mode application program; an asynchronous IO model that is used for sharing an IO request memory queue between the user mode application program and a kernel mode so as to realize asynchronous driving of physical devices; a dynamic runtime library, which can be loaded when the user mode application program is started, the dynamic runtime library is used for generating, after being loaded, a runtime virtual environment for replacing a runtime environment of the user mode application program, the dynamic runtime library comprises an IO operation library function hook and a monitoring thread function; the IO operation library function hook is constructed on the basis of a native library function of the user mode application program, and the IO operation library function is used for adapting an application program interface of the native library function and the asynchronous IO model in the runtime virtual environment, such that an IO operation of an operating system where the user mode application program is located is transformed to be processed by the asynchronous IO model; and the monitoring thread function is used for monitoring whether the IO operation of the asynchronous IO model is completed in the runtime virtual environment, and when the IO operation is completed, waking up a task that is in a wait state due to the IO operation.

In some embodiments, the above-mentioned IO operation library function hook includes: a file descriptor management hook function, a file descriptor read and write hook function, and a POLL status hook function; the file descriptor management hook function is used for creating a file descriptor in the runtime virtual environment, putting the file descriptor into a file descriptor table, and registering the file descriptor in the asynchronous IO model; the file descriptor management hook function is also used for unregistering the file descriptor from the asynchronous IO model in the runtime virtual environment and when the file descriptor is closed; the file descriptor read and write hook function is used for receiving a read request or a write request for the file descriptor in the runtime virtual environment, and putting the read request or the write request into a submission queue of the asynchronous IO model; the POLL status hook function is used for receiving a POLL wait request or a POLL wake-up request in the runtime virtual environment, and putting the POLL wait request or the POLL wake-up request into the submission queue of the asynchronous IO model.

In some embodiments, the above-mentioned dynamic runtime library uses a co-routine to simulate a thread implemented in the native library function. The IO operation library function hook includes: a file IO hook function and a file IO callback function, a network IO hook function and a network IO callback function; the file IO hook function is a function constructed using a HOOK mechanism and related to the file IO library function in the native library function; the network IO hook function is a function constructed using the HOOK mechanism and related to a network IO library function in the native library function; the file IO hook function and the network IO hook function are used for determining whether the operation subject is a co-routine when suspending or waiting for the completion of an IO operation in the runtime virtual environment, and if it is a co-routine, the co-routine is suspended using a co-routine switching or suspension mechanism; the file IO callback function is used for changing the IO-related operations in the file IO hook function to be synchronized with the asynchronous IO model in the runtime virtual environment; the network IO callback function is used for changing the IO-related operations in the network IO hook function to be synchronized with the asynchronous IO model in the runtime virtual environment.

In some embodiments, the above-mentioned dynamic runtime library also comprised: a thread scheduling library function hook, the thread scheduling library function hook is a function constructed using a HOOK mechanism and related to thread creation, recycling and suspension library functions in the native library function. The thread creation, recycling and suspension library functions are functions in the native runtime library of the application that can create, recycle and suspend threads. The thread scheduling library function hook is used for replacing the creation and recycling of threads with the creation and recycling of co-routines in the runtime virtual environment, and after the application program runs, generating a co-routine scheduling thread to schedule at least one co-routine through the co-routine scheduling thread.

In some embodiments, the above-mentioned dynamic runtime library further comprises: a memory management library function hook, the memory management library function hook is a function constructed using a HOOK mechanism and related to memory management in the native library function. The memory management library function hook is used for enabling a thread to start one or more memory allocation areas in the runtime virtual environment. The co-routines belonging to the current co-routine scheduling thread are grouped according to the memory allocation area, and the co-routines belonging to the same memory allocation area share the same co-routine scheduling thread cache.

In some embodiments, after the user mode application program is started and in the runtime virtual environment, the monitoring thread function creates a monitoring thread for each context in the asynchronous IO model, and the monitoring thread is used for polling the completion queue of the asynchronous IO model. When a new ready task is received in the completion queue, waking up the co-routine in the waiting queue corresponding to the IO operation library function hook.

In a second aspect, an embodiment of the present disclosure provides a system running method, the method comprising: loading a library file of an asynchronous IO model, the asynchronous IO model is used for sharing an IO request memory queue between a user mode application program and a kernel mode to realize asynchronous driving of physical devices; when the starting the user mode application program, loading a dynamic runtime library and generating a runtime virtualization environment, and the runtime virtualization environment is an environment for replacing the runtime environment of the user mode application program; in the runtime virtual environment, in response to detecting the call information of the user mode application program to a native library function of the user mode application program, transforming an IO operation of an operating system where the user mode application is located to be processed by the asynchronous IO model through an IO operation library function.

In the runtime virtualization environment, monitoring whether the IO operation of the asynchronous IO model is completed through a monitoring thread function, and when the IO operation is completed, waking up the task that is in a wait state due to the IO operation through the monitoring thread function.

In a third aspect, an embodiment of the present disclosure provides a system running apparatus, the apparatus comprising: a file loading unit configured to load a library file of an asynchronous IO model, the asynchronous IO model is used for sharing an IO request memory queue between a user mode application program and a kernel mode to realize asynchronous driving of physical devices; a library loading unit configured to load a dynamic runtime library when starting the user mode application program to run, and generate a runtime virtualization environment, wherein the runtime virtualization environment is an environment for replacing the runtime environment of the user mode application program; a transformation unit configured to, in the runtime virtual environment and when detecting the call information of the user mode application program to a native library functions of the user mode application program, transform an IO operation of an operating system where the user mode application program is located to be processed by the asynchronous IO model through an IO operation library function; a wake-up unit configured to monitor whether the IO operation of the asynchronous IO model is completed through a monitoring thread function in the runtime virtual environment, and when the IO operation is completed, waking up a task that is in the wait state due to the IO operation through the monitoring thread function.

In a fourth aspect, an embodiment of the present disclosure provides an electronic device, the electronic device comprising: one or more processors; a storage device having one or more programs stored thereon; when the one or more programs are executed by the one or more processors, cause the one or more processors to implement the method as described for example in any embodiment of the second aspect.

In a fifth aspect, an embodiment of the present disclosure provides a computer-readable medium storing a computer program thereon, wherein the program, when executed by a processor, implements the method as described for example in any embodiment of the second aspect is implemented.

### BRIEF DESCRIPTION OF DRAWINGS

By reading the detailed description of the non-limiting embodiments made with reference to the following drawings, other features, purposes and advantages of the present disclosure will become more apparent:
FIG. 1 is a schematic structural diagram of an embodiment of a runtime virtual machine system according to the present disclosure;
FIG. 2 is a schematic structural diagram of another embodiment of a runtime virtual machine system according to the present disclosure;
FIG. 3 is a flow chart of an embodiment of a system running method according to the present disclosure;
FIG. 4 is a schematic structural diagram of an embodiment of a system running apparatus according to the present disclosure;
FIG. 5 is a schematic structural diagram of an electronic device suitable for implementing an embodiment of the present disclosure.

### DETAILED DESCRIPTION

The disclosure is further described in detail below in combination with the figures and embodiments. It may be understood that the specific embodiments described herein are only used to explain the relevant invention, rather than to limit the invention. In addition, it should also be noted that in order to facilitate the descriptions, only the parts related to the relevant invention are shown in the figures.

It should be noted that, in a case where there is no conflict, the embodiments and the features in the embodiments in the disclosure may be combined with each other. The disclosure will be described in detail below with reference to the figures and in combination with the embodiments.

A runtime virtual machine system is often used to provide a cross-platform support or provide a virtualized running environment, and a dynamic library injection is a technical solution that may be used to implement a runtime virtual machine. A shared library, which overwrites a function in an original application and a function in a shared library linked by the original application with its function hook, is injected into an application program.

Application programs executed in various runtime virtual machine environments need to call the system call of the host operating system. However, the cost of executing the system call is extremely high. This is because: on the one hand, entering and returning from the system call means a switch from user mode to kernel mode and a switch from kernel mode to user mode; on the other hand, the user mode virtual address space and the kernel mode address space are isolated from each other, so the user mode and the kernel mode cannot directly access each other's memory, and memory copying is required. Given the high cost of system calls, some high-performance pure user mode programming models have been proposed. By executing as few system calls as possible (letting the application program run in user mode for the majority of the time without any user mode/kernel mode switching), the application program performance is improved and higher IO throughput capabilities are achieved.

Given that some of the existing pure user mode programming models lack a complete network protocol stack and file system ecosystem, while some do not provide full support for application interfaces, code modification is required when the application program is connected, which is complicated to implement, difficult to operate, and has relatively high labor costs.

To better understand traditional technologies, some terms are introduced below: Shared library: it is also known as a "dynamic link library", and is a manner of implementing shared functions or objects in an operating system. Compiled functions are stored in the shared library, and an application program may dynamically load such library files and reference corresponding functions by function names. The same shared library may be loaded by different application programs.

C runtime library: it is a general term for a type of dynamic link libraries providing encapsulation of system calls and various operating system management interfaces, and providing a C language-based programming interface for an interaction between an application program and an operating system at runtime. The application program may be directly constructed based on the C runtime library, or run in a certain runtime virtual machine constructed based on the C runtime library (such as the Java virtual machine -- JVM). In Linux-like systems, different distributions will provide their own C runtime libraries (generally following the POSIX (Portable Operating System Interface) protocol or some extension based on POSIX); for example, the C runtime library in the GNU distribution is called "glibc", while the C runtime library in the Android distribution is called "bionic". In Windows systems, the C runtime library is called the CRT library.

Runtime virtual machine: it is a general term for programs and libraries providing development interfaces and runtime environments for other application programs. Such programs are generally developed based on the C runtime library, and aim to provide a cross-platform program running environment. As compared to a "virtual machine", the runtime virtual machine will not completely simulate a virtual host, but only provide a runtime environment, so it is lighter.

Dynamic library injection: reverse engineering a third-party application to make it execute an injected code is called "code injection"; the dynamic library injection is just a manner of implementing the code injection. The so-called "dynamic library injection" is just to inject the code in the shared library into the target application by loading the shared library into the application program, so that this part of the code is executed by the application, or the original code in the application is dynamically replaced with the injected code.

Kernel mode and user mode: To ensure the security of system running, modern CPUs generally have several different instruction levels. At a high execution level, the code can execute privileged instructions and access any physical address. This operation level corresponds to the kernel mode of the operating system. At a low execution level, the control scope of the code is restricted, and it can only operate within the scope allowed by the corresponding level. This running level corresponds to the user mode. When a user mode program needs to run the functions provided by the operating system kernel, it can switch from the user mode to the kernel mode by executing the corresponding system calls and run the code at high execution level in the kernel mode.

User mode driver: Device drivers typically run in kernel space. However, with the continuous development of software and hardware technology, when attempting to provide high-concurrency connection server capabilities, the drawbacks of kernel mode drivers begin to gradually emerge. For example, a huge overhead of system calls (each device access by an application program must go through a system call), the extremely high requirements for driver stability (because kernel mode errors can directly lead to system crashes), the steep learning curve for developers and the instability of the development interface (when the kernel version is upgraded, once the kernel driver interface changes, the driver needs to be re-adapted to the new version of the kernel), etc. Therefore, hardware companies such as Intel, Texas Instruments, and Freescale immediately began to study this problem and provided solutions for user mode drivers for their hardware.

DPDK and SPDK: DPDK (Data Plane Development Kit) is a user mode network card driver solution. DPDK defines a set of operating environments, and this environment defines a kernel thread for each CPU core. To maximize network throughput, each kernel thread is bound to its corresponding CPU core, and no other threads will run on the CPU core that has been bound to the kernel. Therefore, kernel threads will occupy CPU computing power. The more kernel threads are started, the higher the parallel throughput capacity of the network device will be, but the more computing power will be occupied. SPDK (Storage Performance Development Kit), however, is a user mode storage device driver suite developed based on DPDK, which aims to provide high-performance driver solutions for its high-speed storage devices.

lo_uring technology: a new asynchronous I/O model, io_uring is mainly used to solve problems of high overhead of system calls and memory copying, only supporting direct IO and having size alignment restrictions on data. It uses memory mapping technology to create a shareable ring memory queue between the user mode and the kernel mode, and achieves the goal of reducing system calls and memory copying through shared memory communication. Ideally, it can achieve zero-system-call IO access.

Co-routine: it is also known as a "fiber thread" or a "micro" thread, and is a computer component that generates non-preemptive multitasking sub-programs. The co-routine is generally attached to a certain thread, and allows different sub-program entries to pause or start at a same position. In brief, the co-routine is a function that may be paused and started. Different co-routines may be deemed as different functions, which are called for execution by the host thread. In the execution process, the co-routine can return to the position where it is called by the host thread by actively yielding. When the host thread resumes the co-routine function again, the co-routine will be continued to be executed from the position where it was previously yielded (that is, the so-called "same position" in the previous contents).

Thread local storage (TLS): it is also known as thread local storage, and is a solution to a thread security problem in a specific scenario. In brief, it is just a variable with a process-global scope, and when it has a thread local constraint, this variable may have different values in different threads (that is, thread local values). TLS is divided into two types and three cases according to its implementation method. The first type is a variable with a thread local constraint declared during encoding, for example:
static_thread int global_tls_value=0;

The above variable declaration just represents a global integer variable with an initial value of 0. This variable may be accessed in all threads of a program in which it is located; but changes made to the value of this variable by different threads are only visible to the respective threads themselves. The TLS variable of this type may determine its position in a program data segment and its initial value during a compilation stage, so its relevant information and initial value will be stored in a compiled target program, and when the program is loaded, its position in a thread local context will be locked therefor. There is another case where when the program loads a certain shared library during running, if there are also TLS variables in the shared library, it is required to dynamically determine the positions of these TLSs in the thread local context when loading the shared library. In addition to the TLS variable that has been declared during the encoding, there is a second type, which is dynamically created TLS.

The runtime virtual machine system provided by the embodiments of the present disclosure comprises: a user mode application program; an asynchronous IO model, which is used for sharing an IO request memory queue between the user mode application program and a kernel mode to realize asynchronous driving of physical devices; a dynamic runtime library which can be loaded when the user mode application program is started, wherein the dynamic runtime library is used for generating a runtime virtual environment for replacing the runtime environment of the user mode application program after being loaded; wherein the dynamic runtime library comprises an IO operation library function hook and a monitoring thread function. The IO operation library function hook is constructed based on a native library function of the user mode application program, and the IO operation library function is used for adapting an application program interface of the native library function and the asynchronous IO model in the runtime virtual environment, such that an IO operation of an operating system where the user mode application program is located is transformed to be processed by the asynchronous IO model. The monitoring thread function is used for monitoring whether the IO operation of the asynchronous IO model is completed in the runtime virtual environment, and when the IO operation is completed, waking up a task that is in the wait state due to the IO operation. Therefore, after the user mode application program is started, the runtime dynamic library of the present invention is loaded into the memory of the user mode application to generate a runtime virtual environment. The runtime virtual environment can directly replace the runtime environment of the native runtime library of the user mode application program, take over the IO operation of the operating system where the user mode application is located, and transform the IO operation to be processed by the asynchronous IO model. By processing the IO operation through the asynchronous IO model, the number of system calls is reduced and the IO performance is improved. Through the dynamic injection technology, the user mode application program has pure user mode IO capabilities without making any modification to the application program, thereby saving labor costs and improving the convenience of user mode application program operations.

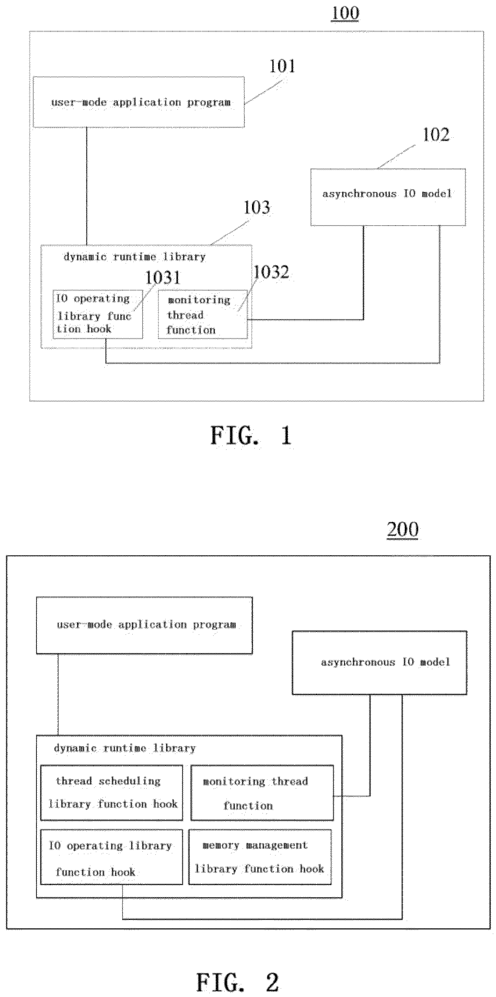

The present disclosure provides a runtime virtual machine system, as shown in FIG. 1, which illustrates a schematic structural diagram of an embodiment of the runtime virtual machine system according to the present disclosure. The runtime virtual machine system 100 includes: a user mode application program 101, an asynchronous IO model 102, and a dynamic runtime library 103, wherein, the asynchronous IO model 102 is used for sharing the IO request memory queue between the user mode application program 101 and the kernel mode to realize asynchronous driving of physical devices.

The dynamic runtime library 103 is loaded into the memory of the user mode application program 101 when the user mode application program is started. After loading the dynamic runtime library, a runtime virtual environment is generated for replacing the runtime environment of the user mode application program. The dynamic runtime library 103 includes an IO operation library function hook 1031 and a monitoring thread function 1032. The IO operation library function hook 1031 is constructed based on the native library functions of the user mode application program. The IO operation library function 1031 is used for adapting the application program interface of the native library function and the asynchronous IO model 102 in the runtime virtual environment, and transforming the IO operation of the operating system where the user mode application is located to be processed by the asynchronous IO model.

The monitoring thread function 1032 is used for monitoring, in the runtime virtual environment, whether the IO operation of the asynchronous IO model 102 is completed, and when the IO operation is completed, waking up a task that is in the wait state due to the IO operation.

In this embodiment, the user mode application program 101 is an application running in user mode. The user mode is a space for the application program to run. Generally, all application programs can only run in user mode. The native library function of the user mode application program is a function that has been compiled in the native C runtime library of the user mode application program. The native runtime library is a dynamic link library that the user application program needs to call to implement its function. Compared with the dynamic runtime library of this disclosure, the application program needs to make multiple system calls to the host operating system, and the cost of system calls is relatively high.

In this embodiment, the dynamic runtime library 103 is loaded when the user mode application program is running, generating a runtime virtual environment that is different from the runtime environment of the user mode application program. The execution logic of the library function in the dynamic runtime library can directly replace the execution logic of the library function in the native runtime library, or replace the execution logic of the library function in the native runtime library under some conditions, and retain the execution logic of the library function in the native runtime library under other conditions.

In this embodiment, when the operating system where the user mode application is located has an IO operation, the library function when the dynamic runtime library 103 is running can directly transform the IO operation to be processed by the asynchronous IO model.

In this embodiment, the asynchronous IO model 102 is a model implemented based on memory mapping technology. The asynchronous IO model can prevent the application program from entering into any system call when allocating or releasing memory, thereby improving the efficiency of memory allocation or release.

In this embodiment, the asynchronous IO model 102 can adopt io_uring, and io_uring can also adopt memory mapping technology to share IO cache between the user mode and the kernel mode. As the name implies, the memory cache of io_uring is a "ring queue", and the application program can also achieve data interaction with the device through the state of the memory cache in the ring queue that loops back and forth. Different from DPDK, which directly drives physical devices, io_uring can access devices or files based on file handles (i.e., it supports the kernel protocol stack and the file system). io_uring asynchronously encapsulates all operations for accessing the kernel protocol stack and the file system inside the kernel. The IO operations initiated by the application program through io_uring will not cause system calls at all, and there is no need to perform memory copying with the kernel.

In this embodiment, the asynchronous IO model includes: a submission queue (SQ) and a completion queue (CQ); wherein the submission queue is a ring queue stored in a contiguous block of memory space, which is used for storing data for which I/O operations are to be performed. The data is an index pointing toward Submission Queue Entry (SQE), and the submission queue entry data is an item of the submission queue. The completion queue is a ring queue stored in a continuous block of memory space for storing the results returned after the I/O operations are completed.

Optionally, the asynchronous IO model can also adopt DPDK or SPDK with a complete kernel protocol stack and file system. DPDK/SPDK is an asynchronous model that is fully implemented in user mode, but the file system and protocol stack ecosystems of both are incomplete. Developers can conduct code development on DPDK or SPDK to access devices or files based on file handles (i.e., implementing a system equivalent to the kernel protocol stack and kernel file system in user mode). The specific code development process will not be elaborated here.

In this embodiment, the monitoring thread function can be a function that generates a monitoring thread in the runtime virtual environment. The monitoring thread generated by the monitoring thread function can monitor in real time the situation of an asynchronous IO model executing an IO operation. When the IO operation is completed, the task that is in a wait state due to the IO operation is waked up to ensure the effective execution of the task.

The runtime virtual machine system provided by the embodiments of the present disclosure comprises: a user mode application program; an asynchronous IO model, which is used for sharing an IO request memory queue between the user mode application program and the kernel mode to realize asynchronous driving of physical devices; a dynamic runtime library that can be loaded when the user mode application program is started, the dynamic runtime library includes an IO operation library function hook and a monitoring thread function; the IO operation library function hook is constructed based on the native library function of the user mode application program, and the IO operation library function is used for adapting the application program interface of the native library function and the asynchronous IO model in the runtime virtual environment, and transforming the IO operation of the operating system where the user mode application is located to be processed by the asynchronous IO model; the monitoring thread function is used for monitoring, in the runtime virtual environment, whether the IO operation of the asynchronous IO model is completed, and when the IO operation is completed, waking up a task that is in the wait state due to the IO operation. Therefore, after the user mode application program is started, the runtime dynamic library of the present disclosure is loaded into the memory of the user mode application program, and can directly replace the native runtime library of the user mode application program, take over the IO operation of the operating system where the user mode application is located, and transform the IO operation to be processed by the asynchronous IO model. By processing the IO operation through the asynchronous IO model, the number of system calls is reduced and the IO performance is improved. Through the dynamic injection technology, the user mode application program has pure user mode IO capabilities without making any modification to the application program, thereby saving labor costs and improving the convenience of the user mode application operations.

In some optional implementations of the present disclosure, the above-mentioned IO operation library function hook includes: a file descriptor management hook function, a file descriptor read and write hook function and a POLL status hook function.

The above-mentioned file descriptor management hook function is used for creating a file descriptor in the runtime virtual environment, putting the file descriptor into the file descriptor table, and registering the file descriptor into the asynchronous IO model. The file descriptor management hook function is also used for unregistering the file descriptor from the asynchronous IO model in the runtime virtual environment and when the file descriptor is closed and releasing the content corresponding to the file descriptor in the file descriptor table.

The above file descriptor read and write hook function is used for, in the runtime virtual environment, receiving a read request or a write request for the file descriptor, and putting the read request or the write request into a submission queue of the asynchronous IO model.

The above POLL status hook function is used for, in the runtime virtual environment, receiving a POLL wait request or a POLL wake-up request, and putting the POLL wait request or the POLL wake-up request into the submission queue of the asynchronous IO model.

The IO operation library function hook provided in this embodiment includes: a file descriptor management hook function, a file descriptor read and write hook function, and a POLL status hook function. Compared with the file descriptor management function in the native library function, the file descriptor management hook function has the ability to communicate data with the asynchronous IO model and can register or unregister the file descriptor to the asynchronous IO model. Compared with the file descriptor read and write function in the native library function, the file descriptor read and write hook function can put the read request and write request of the file descriptor into the submission queue of the asynchronous IO model, so that the reading and writing of the file descriptor are both in user mode, further reducing system calls and improving IO performance. Compared with the POLL status function in the native library function, the POLL status hook function can put the POLL wait requests or POLL wake-up requests into the submission queue of the asynchronous IO model, further reducing system calls and improving IO performance.

In some optional implementations of the present disclosure, the dynamic runtime library uses a co-routine to simulate a thread implemented in the native library function. The IO operation library function hook includes: a file IO hook function and a file IO callback function, a network IO hook function and a network IO callback function.

In this embodiment, the file IO hook function and the network IO hook function are used for determining whether the operation subject is a co-routine when suspending or waiting for the completion of an IO operation in the runtime virtual environment, and if it is a co-routine, the co-routine is suspended using a co-routine switching or suspension mechanism.

The above-mentioned file IO hook function is a function constructed using a HOOK mechanism and related to a file IO library function in the native library function. When the native library function is a function of the C runtime library, the functions related to the file IO library function in the native library function include: Iseek, read/write, readv/writev, etc. The file IO hook function will determine whether the current context is in a thread state. If it is a thread, the native system call or library function is called; if it is a co-routine, the logic of the file IO hook function itself needs to be used.

The network IO hook function is a function constructed using the HOOK mechanism and related to a network IO library function in the native library function. When the native library function is a function of the C runtime library, the functions related to the network IO library function in the native library function include: socket/close, listen/accept, send/recv, sendto/recvfrom, sendmsg/recvmsg, read/write, readv/writev, poll/select/epoll_wait, etc. When a new socket file is created (calling socket or accept), the network IO hook function adds the newly created socket file descriptor to the Structure Management File (UrFd) table and processes all network IO operations related to the socket file descriptor through the asynchronous IO model (such as processing the poll_wait operation through the asynchronous IO model).

For the system native threads (including main threads), there is no problem with blocking waiting and suspending the current thread. Therefore, in the network IO hook functions, when performing suspension or wake-up operations, it is necessary to determine whether the current context is in a thread state. If it is a thread, the thread suspension or wake-up mechanism is adopted, i.e., thread suspension or wake-up; if it is a co-routine, the co-routine suspension or wake-up mechanism is adopted, i.e., co-routine yield/resume.

The network IO hook function is used for managing file descriptors and the POLL state corresponding to the file descriptor through the UrFd structure when the co-routine calls library functions such as send/recv and tries to enter blocking waiting. If the corresponding receiving or sending cache is not ready, the current co-routine context is marked to enter IO wait on this socket and yields in a yield manner.

Similarly, when the co-routine calls library functions such as poll and tries to wait for certain socket states to be ready, the network IO hook function will check the UrFd table to determine if any of these sockets are already in the ready state. If yes, return immediately; if no, mark the IO wait state of the current co-routine context on all the sockets monitored by this poll operation, and yield in the yield manner.

When the background epoll thread receives a batch of socket ready signals, it will check whether there is a co-routine context that has marked the IO wait state on these sockets. If yes, wake up these co-routines in batches.

There is a hook function for generating a co-routine scheduling thread in the dynamic runtime library. After the co-routine scheduling threads are generated, each co-routine scheduling thread maintains a lock-free wakeup queue. The above-mentioned waking up a certain co-routine means putting the co-routine context of this co-routine into the wakeup queue of its scheduling thread.

In this embodiment, the execution subject uses its own UrFd structure and UrFd table (which is also a lock-free hash table) to manage the opened file descriptors. The UrFd structure contains at least the following three fields: the first is the file descriptor (that is, the primary key of the UrFd table); the second is the poll status of the file; the third is the lock-free waiting queue. Different from the virtual machine system generated by the file IO hook function and network IO hook function, in the IO hook function of this virtual machine system, the library function will be taken over only in the co-routine context state; in the thread context state, it is still implemented by executing system calls. However, the core goal of this embodiment is to construct a "pure user mode" runtime environment, so even in the thread context state, it is necessary to use a pure user mode method to implement it, that is, by transforming the IO operation to be implemented by the asynchronous IO model and using pure user mode solutions as much as possible to improve the overall performance. In the UrFd structure of this disclosure, the lock-free waiting queue is used for maintaining the situation where multiple co-routines (or threads) are in a poll wait or IO wait on the same file descriptor.

In this embodiment, the file IO callback function is used for, in the runtime virtual environment, changing the IO-related operations in the file IO hook function to be synchronized with the asynchronous IO model. Through the file IO callback function, the file IO library function can be taken over and the asynchronous IO model can be connected to achieve the purpose of synchronization with the asynchronous IO model. Specifically, the file IO callback function includes: a first callback function related to file descriptor reading. The first callback function is used for submitting a read request related to the file descriptor to the submission queue of the asynchronous IO model after receiving said read request, putting the current co-routine context into the waiting queue of the corresponding file descriptor and yielding in a yield (or thread suspension) manner. Upon receiving a message indicating that the asynchronous IO model is ready, set the state of the file descriptor and wake up the co-routines (or threads) in the waiting queue of the file descriptor, wherein the waiting queue of the file descriptor is a lock-free queue structure that supports waiting with or without a timeout, and supports co-routine swapping out and thread suspension at the same time.

The file IO callback function also includes: a second callback function related to file descriptor writing. The second callback function is used for submitting a write request related to the file descriptor to the submission queue of the asynchronous IO model after receiving this write request, putting the current co-routine context into the waiting queue of the corresponding file descriptor, and yielding in a yield (or thread suspension) manner. Upon receiving a message indicating that the asynchronous IO model is ready, set the state of the file descriptor and wake up the co-routines (or threads) in the waiting queue of the file descriptor.

The network IO callback function is used for changing the IO-related operations in the network IO hook function to be synchronized with the asynchronous IO model in the runtime virtual environment. Through the network IO callback function, the network IO library function can be taken over and the asynchronous IO model can be connected to achieve the purpose of synchronization with the asynchronous IO model.

In this embodiment, the network IO callback function includes: a second callback function related to file descriptor management (creation or closing), and a third callback function related to POLL waiting, wherein the second callback function is started when the file descriptor is created or closed, a UrFd structure is created for the newly created file descriptor and put into the UrFd table, and the file descriptor is registered in the asynchronous IO model. When closing the file descriptor, the file descriptor is unregistered from the asynchronous IO model, and the UrFd structure corresponding to the UrFd table is released.

When the POLL status is not ready, the third callback function submits the POLL status request to the submission queue of the asynchronous IO model, putting the current co-routine context into the waiting queue of UrFd, and yielding in a yield (or thread suspension) manner. The waiting operation with timeout is implemented by a lock-free timeout queue.

The dynamic runtime library provided in this embodiment implements the simulation of threads in the native library functions by co-routines in the file IO and the network IO through the file IO hook functions and the network IO hook functions, takes over the functions of the file IO hook functions through the file IO callback functions and realizes the connection with the asynchronous IO model, and takes over the network IO hook functions through the network IO callback functions and realizes the connection with the asynchronous IO model, which increases the user mode effect of the runtime environment of the runtime virtual machine system, reduces system calls, and improves IO performance.

In some optional implementations of this embodiment, as shown in FIG. 2, the dynamic runtime library also includes: a thread scheduling library function hook. The thread scheduling library function hook is a function constructed using a HOOK mechanism and related to thread creation, recycling, and suspension library functions in the native library function. The thread creation, recycling and suspension library functions are functions in the native runtime library of the application program that can create, recycle and suspend threads. The thread scheduling library function hook is used for, in the runtime virtual environment, replacing the creation and recycling of threads with the creation and recycling of co-routines, and generating, after the application runs, a co-routine scheduling thread to schedule at least one co-routine through the co-routine scheduling thread.

In this embodiment, the dynamic runtime library is loaded when the user mode application program is started, and a co-routine scheduling thread can be generated.

Wherein, the co-routine scheduling thread includes: a scheduler and a lock-free queue for placing the at least one co-routine, and the specific step of scheduling the at least one co-routine using the co-routine scheduling thread comprises: acquiring, by the scheduler, a co-routine in a ready state among the at least one co-routine from the lock-free queue; synchronizing a co-routine context of the co-routine with a thread context in a thread control block; acquiring, by the scheduler, a next co-routine in the ready state from the lock-free queue, and synchronizing a co-routine context of the next co-routine with the thread context in the thread control block after the co-routine actively yields; and continuing to acquire, by the scheduler, a co-routine from the lock-free queue and synchronizing the thread control block until there is no co-routine in the lock-free queue after the next co-routine actively yields.

In this embodiment, the thread control block is a data structure of a thread in the native runtime library, which is called a "thread control block" (TCB for short), that is, a context structure of a thread. dtv and specific array are data structures that store TLS data in the TCB. dtv: it is used to store TLS variables defined during an encoding stage. The data will increase as the application program loads a new shared library, because TLS variables may also exist in the shared library.
specific: it is a dynamically created TLS (where the library functions for creating and deleting TLS keys are pthread_key_create and pthread_key_delete, respectively; and the library functions for reading and modifying TLS values are pthread_getspecific and pthread_setspecific, respectively). TLSs of this type are maintained using a set of pointer arrays (specific arrays), so there is an upper limit for the number (Linux supports creation of up to 1024 dynamic TLSs).

In this embodiment, the scheduler will perform incremental synchronization of TLS data between the TCB and the co-routine context.

In the thread scheduling library function hook, the co-routine context structure is used to replace the thread descriptor, and the currently running thread or co-routine is marked by a global variable with thread local constraints. The thread local storage information in the co-routine context structure is managed by the synchronization management module. The synchronization management module is used for synchronizing the thread local storage of the co-routine when the co-routine scheduling thread schedules the co-routine.

The co-routine context structure (hereinafter referred to as a COCTX structure) is a structure for placing the co-routine context (hereinafter referred to as a COCTX), which is used to maintain the context of the co-routine, and the purpose of which is similar to that of a thread descriptor (or a thread handle). In order to provide compatibility with a thread behavior, it is required to hook a library function for creating a thread and acquiring a thread descriptor in the native runtime library, and replace the thread descriptor with the COCTX. Taking Linux as an example, the thread descriptor thereof is called "TCB" and the implementation thereof is a structure called "pthread". The calls for creating a thread and acquiring a thread descriptor in Linux are respectively:
pthread_create: it creates a thread and returns a thread descriptor, and the value of this thread descriptor is the address of the TCB structure. In this embodiment, the hook for creating a thread function is replaced with a pointer returning to the COCTX.
pthread_self: it acquires the descriptor of the current thread, and is also replaced with the pointer of the COCTX.

In this embodiment, a global TLS variable (a global variable with a thread local constraint) may be used to acquire the context of the current co-routine, which is declared as follows:
extern_thread COCTX*_current_coctx;

In this embodiment, the COCTX has the following 4 types:
Co-routine COCTX: it corresponds to an actual co-routine;
Global COCTX: _current_coctx of the main thread will be set to a global COCTX, which will be created when the dynamic runtime library is just loaded;
Scheduler COCTX: each co-routine scheduling thread (just a thread that runs a co-routine) will have a default COCTX, and if no co-routine is in the ready state, or in the intermediate state of switching between two co-routines, the _current_coctx of the current thread will be set to a scheduler COCTX;
Single COCTX: when a system native thread is created, a virtual COCTX will be created therefor.

As mentioned above, the hook function of the pthread_self is actually just a value returning to the _current_coctx. In the program, by judging the type of the current COCTX, it may be known which thread and running state are currently involved.

In this embodiment, the contents stored in the COCTX structure include: a co-routine stack and a TLS. The dynamic runtime library allocates an independent stack for each co-routine, so it may completely simulate a behavior of a thread (including the size of the memory allocated in the stack and the depth of the call stack).

If the co-routine cannot completely simulate the TLS mechanism of the thread, the co-routine will be rendered unable to securely access a variable with a TLS constraint. In this embodiment, encapsulation of TLS management is implemented by a synchronization management module (hereinafter referred to as co_tls), and the capability provided by the co_tis is crucial for "transparent" simulation of the thread. Taking Linux as an example, its TCB stores the following two types of TLS: dtv and specific.

The support of the specific by the co_tls in the disclosure: a data structure similar to the specific arrays in the TCB is required to be maintained in the co_tls, and when a newly created co-routine is resumed for execution for the first time, the specific in the TCB of the scheduling thread to which it belongs will be copied. In addition, it is further required to hook and manage the library functions of the specific, the library functions of Linux are listed above, and there are also similar functions in Windows, namely TlsAlloc, TlsFree, TlsGetValue, and TlsSetValue.

The support of the dtv by the co_tls in the disclosure: similarly, when a newly created co-routine is scheduled for execution for the first time, it is also required to copy the dtv in the TCB. However, unlike the specific, the content of the specific in the co_tls is no longer required to be synchronized with the TCB; but since other shared libraries may be dynamically loaded at runtime, the dtv of the co_tls is required to be incrementally synchronized with the dtv in the TCB. We store a dtv incremental backup of the TCB in the scheduler COCTX for describing an incremental part generated by the dtv each time a shared library is loaded. Meanwhile, we require to hook the library function call for loading the shared library (this library function is called dlopen in Linux and corresponds to LoadLibrary in Windows). Taking Linux as an example, a data structure called "link_map" describes all pieces of shared library information, and in combination with the link_map and the dtv incremental backup, a difference between the current co-routine and a dtv increment may be analyzed. For the merging of the dtv increment, a "lazy" synchronization solution is adopted, that is, it is determined whether the dtv is required to be synchronized when the co-routine is about to be resumed. If the dlopen is called in a certain co-routine, it is required to identify the _current_coctx as a co-routine type in the hook of the dlopen and immediately synchronize the dtv for the current co-routine.

In this embodiment, co-routines that are completely consistent with the thread capabilities can be simulated through the thread scheduling library function hook. The switching process of the co-routine is as follows: first, in the initial state of the co-routine scheduling thread, the _current_coctx is the scheduler COCTX; then, when it is required to resume a co-routine, it is checked whether there is a difference between the co-routine and the dtv incremental backup (if so, synchronization is required), and after difference synchronization is completed, the _current_coctx is set to the context of the current co-routine; finally, when the co-routine is required to be yielded, the _current_coctx is changed back to the scheduler COCTX. The entire co-routine switching process is executed completely in a user mode without any interaction with the operating system, thereby maintaining lightweight characteristics of the co-routine.

Optionally, the thread scheduling library function hook also includes: a lock library function hook, in which the currently running subject is determined through a global variable with thread local constraints, and the corresponding lock sub-mechanism for the currently running subject is provided based on the currently running subject.

The dynamic runtime library provided in this embodiment can simulate thread creation and recycling with co-routine creation and recycling. At the same time, it provides support for co-routine swapping in and out (i.e., simulation of thread suspension and wakeup) and proper handling of TLS (Thread Local Storage) (i.e., concurrent and secure access to TLS between co-routines). Moreover, based on the above capabilities, it provides support for co-routine-based locks and semaphores (such as mutex, rwlock, condition variables, semaphore, etc.), as well as timeout wakeup (timer) mechanism. Therefore, neither thread management nor thread suspension/wakeup (including: lock suspension, timer suspension, etc.) operations need to enter into any system call, and are completely implemented in the user mode. When "transparently" replacing the runtime environment of the user mode application program with a pure user mode environment, the solution provided by the optional implementation of this embodiment ensures that the overall thread scheduling is "transparently" replaced with the user mode.

In some optional implementations of this embodiment, as shown in FIG. 2, the dynamic runtime library further includes: a memory management library function hook, the memory management library function hook is a function constructed using a HOOK mechanism and related to memory management in the native library function, and the memory management library function hook is used for enabling a thread to start one or more memory allocation areas in the runtime virtual environment, and the co-routines belonging to a current co-routine scheduling thread are grouped according to the memory allocation areas, and the co-routines belonging to the same memory allocation area share the same co-routine scheduling thread cache.

Pure user mode memory management can be achieved by pre-allocating large blocks of memory using mmap (memory map).

Specifically, mmap can map a section of memory address space with contiguous virtual addresses. Moreover, as long as the starting address is aligned, whether in user mode or kernel mode, it is possible to directly access the memory pages in their respective address spaces through the starting address of the memory mapping (that is, the offset of the same page relative to the starting address is the same in user mode and kernel mode). Therefore, when a user mode program accesses the memory mapped by mmap, it is no different from general memory access, and there is no need to explicitly use system calls to allocate physical memory. When an application program accesses a memory address where physical memory pages have not been allocated, it will implicitly trigger a "page fault". The interrupt processing program will allocate physical memory and establish a mapping relationship, and the application program itself will not enter the kernel mode. However, the physical memory allocated by the page fault interrupt mechanism may be released or swapped out to the swap partition by the kernel due to insufficient available physical memory, and the memory page will return to the "absent" state again. When this memory page is accessed next time, physical memory will be reallocated to it through a page fault interrupt, or the page on the swap partition will be "swapped" back into the physical memory. In order to ensure that the memory page is always "present" and reduce the number of page fault interrupts (the larger the page, the fewer the number of pages, Linux generally uses 2MB huge pages), the pure user mode programming frameworks often adopts "huge page" memory mapping to manage the memory mapping shared between the user mode and the kernel mode. Huge page memory will not be swapped out by the kernel, thus ensuring that its memory pages are "anchored" to the corresponding physical memory pages.

For the default memory allocator in the traditional virtual machine, the system call is used to implement the allocation of small-sized memory, and mmap is only used to allocate large-sized memory. Therefore, it often enters into system calls when allocating memory. The memory management subsystem in this system makes the memory implementation completely based on mmap allocate large blocks of memory, realizing pure user mode memory management. In the process of "transparently" replacing the runtime environment of the user mode application program with the pure user mode environment, the solution provided by the optional implementation of this embodiment ensures that the overall memory management is "transparently" replaced with the user mode.

In some optional implementations of this embodiment, the monitoring thread function creates a monitoring thread for each context in the asynchronous IO model after the user mode application program is started and in the runtime virtual environment, and the monitoring thread is used for polling a completion queue of the asynchronous IO model, and when a new ready task is received in the completion queue, waking up the co-routine in a waiting queue corresponding to the IO operation library function hook.

The dynamic runtime library provided in this embodiment can create a background thread-monitoring thread for the context of the asynchronous IO model, wherein the monitoring thread can be one or more. By the created multiple monitoring threads, load balancing of IO requests can be achieved. The background monitoring threads repeatedly poll the completion queue of the asynchronous IO model. When a new ready task is received, the co-routine context in the lock-free waiting queue is waked up to achieve the purpose of waking up the co-routine that executes the corresponding task.

The dynamic runtime library provided in this embodiment uses the monitoring thread function to generate a monitoring thread. The monitoring thread polls the completion queue of the asynchronous IO model to improve the comprehensiveness of the information acquisition, ensuring the pure user mode effect of the user mode application program.

Through the runtime virtual machine system shown in FIG. 2, the present disclosure proposes a "transparent" pure user mode runtime virtual machine system. As long as the application program preloads the dynamic library at runtime, it can run in a pure user mode virtualization environment without making any modification to the application program, thereby improving application performance; that is, the present disclosure perfectly integrates the co-routine-runtime virtual machine system with the pure user mode programming technology, thereby providing a pure user mode runtime environment that is completely "transparent" to the application program.

The solution of the present disclosure combines co-routines (i.e., pure user mode virtual thread scheduling), a pure user mode memory manager based on mmap, and a pure user mode IO subsystem based on io_uring to construct a set of pure user mode operating environments that can bypass all system calls in most cases.

The solution of the present invention can provide perfect compatibility with the POSIX protocol interface. Developers can use the development library implemented based on the present disclosure to "transparently" implement the development of pure user mode application programs. That is, the present disclosure provides a development interface that integrates the native network protocol stack with the file system ecosystem and is fully compatible with the POSIX protocol.

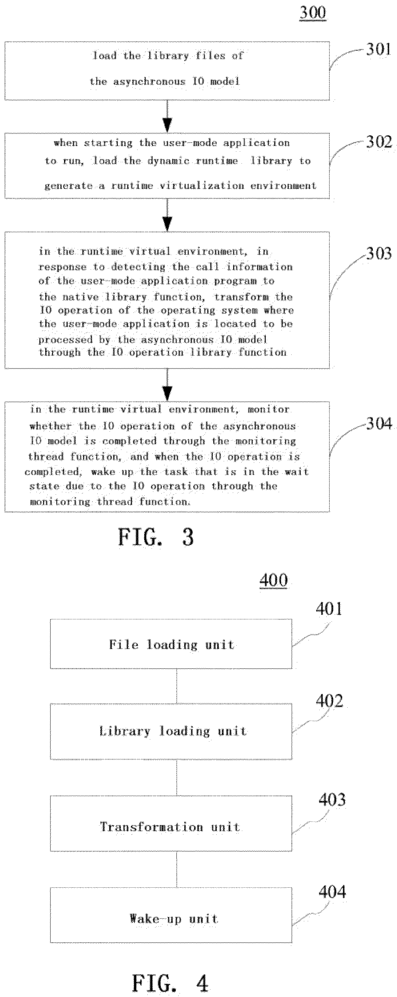

Further referring to FIG. 3, as an implementation of the runtime virtual machine system shown in the above figures at runtime, the present disclosure provides an embodiment of the system running method. As shown in FIG. 1, a flow 300 of an embodiment of the system running method according to the present disclosure is presented. This system running method includes the following steps:
Step 301, load the library files of the asynchronous IO model.

In this embodiment, the asynchronous IO model is used for sharing the IO request memory queue between the user mode application program and the kernel mode, so as to achieve asynchronous driving of physical devices.

In this embodiment, the library files of the asynchronous IO model implements the files of the asynchronous IO model. After these library files are loaded into the memory of the user mode application, the call to the asynchronous model can be realized when running the user mode application program.

In this embodiment, three types of library function calls can be implemented through the asynchronous IO model: setting the context of the asynchronous IO model; submitting and obtaining completed tasks; and enabling registered kernel users to share buffers through memory mapping technology. The calls for submitting and obtaining task completion status are all directly interacted with the memory mapping queue in user mode without the need for system calls. Only the setting of the asynchronous IO context and the registration/unregistration of the file descriptor need to be implemented as system calls.

Step 302, when starting the user mode application to run, load the dynamic runtime library to generate a runtime virtualization environment.

In this embodiment, the dynamic runtime library is a kind of dynamic library. When the user mode application program is started, the dynamic runtime library is loaded to directly generate a runtime virtualization environment corresponding to the motion dynamic library, and the runtime virtualization environment is an environment for replacing the runtime environment of the user mode application program.

In this embodiment, the compiled functions are stored in the dynamic runtime library. The dynamic runtime library provides an API (Application Program Interface) interface to the application program based on the library function, and the user mode application program issues a task request to the dynamic runtime library by calling the API. Optionally, on the basis of the native runtime library, the dynamic runtime library can be obtained by hooking the library functions related to thread scheduling in the native runtime library. After loading, the dynamic runtime library can have scheduling capabilities equivalent to those of the thread.

In this embodiment, the C runtime library can be fully hooked to obtain the dynamic runtime library. A runtime virtualization environment is provided by the dynamic runtime library, and the application program runs in this runtime virtualization environment, simulating the thread implemented in the native runtime in a co-routine manner and achieving the purposes of simulating threads with co-routines and scheduling co-routine by co-routine scheduling thread.

Step 303, in the runtime virtual environment, in response to detecting the call information of the user mode application program to the native library function of the user mode application program, transform the IO operation of the operating system where the user mode application is located to be processed by the asynchronous IO model through the IO operation library function.

Step 304, in the runtime virtual environment, monitor whether the IO operation of the asynchronous IO model is completed through the monitoring thread function, and when the IO operation is completed, waking up the task that is in the wait state due to the IO operation through the monitoring thread function.

The system running method provided by the embodiments of the present disclosure is as follows: first, loading a library files of an asynchronous IO model; second, when starting the user mode application program to run, loading a dynamic runtime library and generating a runtime virtualization environment; third, in the runtime virtual environment, in response to detecting the call information of the user mode application program to a native library function of the user mode application program, transforming an IO operation of an operating system where the user mode application program is located to be processed by the asynchronous IO model through an IO operation library function; finally, in the runtime virtual environment, monitoring whether the IO operation of the asynchronous IO model is completed through a monitoring thread function, and when the IO operation is completed, waking up a task that is in a wait state due to the IO operation through the monitoring thread function. Thus, by combining the dynamic injection technology with the asynchronous IO model, the encapsulation of the system calls related to the IO operation in the runtime library is implemented using pure user state technology. Moreover, the original user mode application program on the host machine can run completely "transparently" in the pure user mode runtime environment, thereby achieving higher performance without making any modification to the application program, effectively controlling the occupancy rate of thread resources in the system, reducing system resource consumption and resource scheduling pressure, thereby improving the overall throughput and availability of the system.

Further referring to FIG. 4, as an implementation of the system running method shown in the above figures, the present disclosure provides an embodiment of a system running apparatus. This apparatus embodiment corresponds to the method embodiment shown in FIG. 3, and the apparatus can be specifically applied to various electronic devices.

As shown in FIG. 4, the embodiment of the present disclosure provides a system running apparatus 400, which includes: a file loading unit 401, a library loading unit 402, a transformation unit 403, and a wake-up unit 404. The above-mentioned file loading unit 401 can be configured to load the library files of the asynchronous IO model, and the asynchronous IO model is used for sharing an IO request memory queue between a user mode application program and a kernel mode to realize asynchronous driving of physical devices. The above library loading unit 402 can be configured to load a dynamic runtime library and generate a runtime virtualization environment when starting the user mode application program to run, wherein the runtime virtualization environment is an environment for replacing the runtime environment of the user mode application program. The above transformation unit 403 can be configured to in the runtime virtual environment and when detecting the call information of the user mode application program to a native library functions of the user mode application program, transform an IO operation of an operating system where the user mode application program is located to be processed by the asynchronous IO model through an IO operation library function. The above wake-up unit 404 can be configured to monitor whether the IO operation of the asynchronous IO model is completed through a monitoring thread function in the runtime virtual environment, and when the IO operation is completed, waking up a task that is in a wait state due to the IO operation through the monitoring thread function.

In this embodiment, in the apparatus 400, the specific processing of the file loading unit 401, the library loading unit 402, and the transformation unit 403 as well as the technical effects brought by them can refer to step 301, step 302, and step 303 in the corresponding embodiment of FIG. 1, respectively.

The system running apparatus provided by the embodiments of the present disclosure is as follow: first, the file loading unit 401 loads the library files of the asynchronous IO model; second, the library loading unit 402 loads the dynamic runtime library when starting the user mode application program and generates a runtime virtualization environment. The runtime virtualization environment is an environment for replacing the runtime environment of the user mode application program. Third, the transformation unit 403 in the runtime virtual environment and when detecting the call information of the user mode application program to a native library functions of the user mode application program, transforms an IO operation of an operating system where the user mode application program is located to be processed by the asynchronous IO model through an IO operation library function. Finally, the wake-up unit monitors whether the IO operation of the asynchronous IO model is completed through a monitoring thread function in the runtime virtual environment, and when the IO operation is completed, wakes up a task that is in a wait state due to the IO operation through the monitoring thread function. Thus, by combining the dynamic injection technology with the asynchronous IO model, the encapsulation of the system calls related to the IO operation in the runtime library is implemented using a pure user state technology. Moreover, the existing user mode application program on the host machine can run completely "transparently" in the pure user mode runtime environment, thereby achieving higher performance without making any modification to the application program, effectively controlling the occupancy rate of thread resources in the system, reducing the system resource consumption and resource scheduling pressure, and thereby improving the overall throughput and availability of the system.

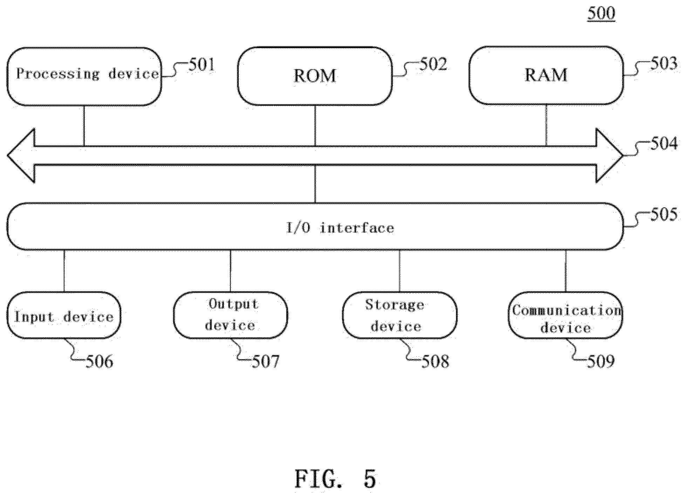

Referring to FIG. 5 below, it shows a schematic structural diagram of an electronic device 500 suitable for implementing the embodiments of the present disclosure.

As shown in FIG. 5, the electronic device 500 may include a processing device (such as a central processing unit, a graphics processor, etc.) 501, which can perform various appropriate actions and processing according to programs stored in a read-only memory (ROM) 502 or programs loaded from a storage device 508 into a random access memory (RAM) 503. In the RAM503, various programs and data required for the operation of the electronic device 500 are also stored. The processing device 501, ROM 502 and RAM 503 are connected to each other via a bus 504. An I/O interface 505 is also connected to the bus 504.

Typically, the following devices may be connected to the I/O interface 505: an input device 506 including, for example, a touch screen, a touchpad, a keyboard, a mouse, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to communicate wirelessly or by wire with other devices to exchange data. Although FIG. 5 shows an electronic device 500 with various devices, it should be understood that it is not required to implement or have all the devices shown. More or fewer devices may be implemented or provided alternatively. Each block shown in FIG. 5 may represent one device or may represent multiple devices as needed.

In particular, according to the embodiments of the present disclosure, the processes described above with reference to the flowcharts may be implemented as computer software programs. For example, the embodiments of the present disclosure include a computer program product, which includes a computer program carried on a computer-readable medium. The computer program contains program code for executing the methods shown in the flowcharts. In such an embodiment, the computer program can be downloaded and installed from the network through the communication device 509, or installed from the storage device 508, or installed from the ROM 502. When the computer program is executed by the processing device 501, the above-mentioned functions defined in the methods of the embodiments of the present disclosure are performed.

It should be noted that the computer-readable medium in the embodiments of the present disclosure can be a computer-readable signal medium or a computer-readable storage medium or any combination of the above two. The computer-readable storage medium can be, for example, but not limited to, an electrical, magnetic, optical, electromagnetic, infrared, or semiconductor system, apparatus or device, or any combination of the above. More specific examples of computer-readable storage media can include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the embodiments of the present disclosure, the computer-readable storage medium can be any tangible medium containing or storing a program, which can be used by or in conjunction with an instruction execution system, apparatus or device. In the embodiments of the present disclosure, the computer-readable signal medium may include a data signal propagated in the baseband or as part of a carrier wave, which carries computer-readable program code. Such a propagated data signal may take a variety of forms, including but not limited to an electromagnetic signals, an optical signal, or any suitable combination of the above. The computer-readable signal medium may also be any computer-readable medium other than a computer-readable storage medium, and the computer-readable signal medium may send, propagate, or transmit a program for use by or in conjunction with an instruction execution system, apparatus, or device. The program code contained on the computer-readable medium may be transmitted using any appropriate medium, including but not limited to: wires, optical cables, RF (Radio Frequency), etc., or any suitable combination of the above.

The above-mentioned computer-readable medium may be included in the server; or it may exist independently without being assembled into the server. The above computer-readable medium carries one or more programs. When the above one or more programs are executed by the server, it enables the server to: load the library file of the asynchronous IO model, wherein the asynchronous IO model is used for sharing the IO request memory queue between a user mode application and a kernel mode to realize the asynchronous driving of physical devices; load the dynamic runtime library when the user mode application runtime is started to generate a runtime virtualization environment, wherein the runtime virtualization environment is an environment for replacing the runtime environment of the user-mode application program; and in the runtime virtual environment, in response to detecting the call information of the IO operation library function hook that adapts to the asynchronous IO model in the dynamic runtime library, transform the IO operation of the operating system where the user mode application is located to be processed by the asynchronous IO model through the IO operation library function.

The computer program code for performing the operations of the embodiments of the present disclosure can be written in one or more programming languages or a combination thereof. The programming languages include an object-oriented programming language, such as Java, Smalltalk, C++, and also include a conventional procedural programming language, such as "C" language or similar programming language. The program code can be executed completely on the user's computer, partially on the user's computer, as an independent software package, partially on the user's computer and partially on the remote computer, or completely on the remote computer or server. In the case of the remote computer, the remote computer can be connected to the user's computer through any type of network, including a local area network (LAN) or a wide area network (WAN), or can be connected to an external computer (for example, using an Internet service provider to connect through the Internet).

The flowcharts and block diagrams in the drawings illustrate the possibly implemented architectures, functions, and operations of the system, method and computer program product according to various embodiments of the present disclosure. In this regard, each block in the flowcharts or block diagrams may represent a module, a program segment, or a portion of the code, which contains one or more executable instructions for implementing the specified logical functions. It should also be noted that in some alternative implementations, the functions marked in the blocks may also occur in a different order from that marked in the drawings. For example, two blocks represented in succession may actually be executed substantially in parallel, and they may sometimes be executed in the reverse order, depending on the functions involved. It should also be noted that each block in the block diagram and/or flowchart, as well as the combination of blocks in the block diagram and/or flowchart, can be implemented by a dedicated hardware-based system that performs the specified functions or operations, or can be implemented by a combination of dedicated hardware and computer instructions.

The units involved in the embodiments described in the present disclosure can be implemented by software or by hardware. The described units can also be set in the processor. For example, it can be described as: a processor including a file loading unit, a library loading unit, and a transformation unit, wherein, the names of these units do not constitute a limitation on the unit itself under certain circumstances. For example, the file loading unit can also be described as a unit "configured to load the library files of the asynchronous IO model."

The above description is only a preferred embodiment of the present disclosure and an explanation of the technical principles used. Those skilled in the art should understand that the scope of the invention involved in the embodiments of this disclosure is not limited to the technical solutions formed by a specific combination of the above-mentioned technical features, but also should cover other technical solutions formed by any combination of the above-mentioned technical features or their equivalent features without departing from the above-mentioned inventive concept. For example, a technical solution formed by the above-mentioned features mutually replaced with the technical features having similar functions disclosed in (but not limited to) the embodiments of the present disclosure.

## Claims

1. A runtime virtual machine system, the system comprising:
a user mode application program;
an asynchronous IO model, which is used for sharing an IO request memory queue between the user mode application program and a kernel mode, so as to realize asynchronous driving of physical devices; and
a dynamic runtime library, which can be loaded when the user mode application program is started, wherein the dynamic runtime library is used for generating, after being loaded, a runtime virtual environment for replacing a runtime environment of the user mode application program; wherein the dynamic runtime library comprises an IO operation library function hook and a monitoring thread function;
the IO operation library function hook is constructed on the basis of a native library function of the user mode application program, and an IO operation library function is used for adapting an application interface of the native library function and the asynchronous IO model in the runtime virtual environment, such that an IO operation of an operating system where the user mode application program is located is transformed to be processed by the asynchronous IO model;
the monitoring thread function is used for, in the runtime virtual environment, monitoring whether the IO operation of the asynchronous IO model is completed, and when the IO operation is completed, waking up a task that is in a wait state due to the IO operation.

2. The system according to claim 1, wherein the IO operation library function hook comprises: a file descriptor management hook function, a file descriptor read and write hook function, and a POLL status hook function;
the file descriptor management hook function is used for, in the runtime virtual environment, creating a file descriptor, putting the file descriptor into a file descriptor table, and registering the file descriptor into the asynchronous IO model;
the file descriptor management hook function is also used for unregistering the file descriptor from the asynchronous IO model in the runtime virtual environment and when the file descriptor is closed;
the file descriptor read and write hook function is used for, in the runtime virtual environment, receiving a read request or a write request for the file descriptor, and putting the read request or the write request into a submission queue of the asynchronous IO model;
the POLL status hook function is used for, in the runtime virtual environment, receiving a POLL wait request or a POLL wake-up request, and putting the POLL wait request or the POLL wake-up request into the submission queue of the asynchronous IO model.

3. The system according to claim 1, wherein, the dynamic runtime library uses a co-routine to simulate a thread implemented in the native library function, and the IO operation library function hook comprises: a file IO hook function and a file IO callback function, a network IO hook function and a network IO callback function;
the file IO hook function is a function constructed using a HOOK mechanism and related to a file IO library function in the native library function;
the network IO hook function is a function constructed using the HOOK mechanism and related to a network IO library function in the native library function; the file IO hook function and the network IO hook function are used for determining whether the operation subject is a co-routine when suspending or waiting for the completion of an IO operation in the runtime virtual environment, and if it is a co-routine, the co-routine is suspended using a co-routine switching or suspension mechanism;
the file IO callback function is used for changing the IO-related operations in the file IO hook function to be synchronized with the asynchronous IO model in the runtime virtual environment; and
the network IO callback function is used for changing the IO-related operations in the network IO hook function to be synchronized with the asynchronous IO model in the runtime virtual environment.

4. The system according to claim 1, the dynamic runtime library further comprises: a thread scheduling library function hook, the thread scheduling library function hook is a function constructed using a HOOK mechanism and related to thread creation, recycling, and suspension library functions in the native library function, wherein the thread creation, recycling, and suspension library functions are functions in the native runtime library of the application program that can create, recycle, and suspend threads, and the thread scheduling library function hook is used for, in the runtime virtual environment, replacing the creation and recycling of threads with the creation and recycling of co-routines, and generating, after the application program runs, a co-routine scheduling thread to schedule at least one co-routine through the co-routine scheduling thread.

5. The system according to claim 3, the dynamic runtime library further comprises: a memory management library function hook, the memory management library function hook is a function constructed using a HOOK mechanism and related to memory management in the native library function, and the memory management library function hook is used for enabling a thread to start one or more memory allocation areas in the runtime virtual environment, and the co-routines belonging to a current co-routine scheduling thread are grouped according to the memory allocation areas, and the co-routines belonging to the same memory allocation area share the same co-routine scheduling thread cache.

6. The system according to one of claims 3 to 5, the monitoring thread function creates a monitoring thread for each context in the asynchronous IO model after the user mode application program is started and in the runtime virtual environment, and the monitoring thread is used for polling a completion queue of the asynchronous IO model, and when a new ready task is received in the completion queue, waking up the co-routine in a waiting queue corresponding to the IO operation library function hook.

7. A system running method, the method comprising:
loading a library file of an asynchronous IO model, where the asynchronous IO model is used for sharing an IO request memory queue between a user mode application program and a kernel mode to realize asynchronous driving of physical devices;
when starting the user mode application program to run, loading a dynamic runtime library and generating a runtime virtualization environment, wherein the runtime virtualization environment is an environment for replacing the runtime environment of the user mode application program;
in the runtime virtual environment, in response to detecting the call information of the user mode application program to a native library function of the user mode application program, transforming an IO operation of an operating system where the user mode application program is located to be processed by the asynchronous IO model through an IO operation library function;
in the runtime virtual environment, monitoring whether the IO operation of the asynchronous IO model is completed through a monitoring thread function, and when the IO operation is completed, waking up a task that is in a wait state due to the IO operation through the monitoring thread function.

8. A system running apparatus, the apparatus comprising:
a file loading unit configured to load a library file of an asynchronous IO model, wherein the asynchronous IO model is used for sharing an IO request memory queue between a user mode application program and a kernel mode to realize asynchronous driving of physical devices;
a library loading unit configured to load a dynamic runtime library and generate a runtime virtualization environment when starting the user mode application program to run, wherein the runtime virtualization environment is an environment for replacing the runtime environment of the user mode application program;
a transformation unit configured to, in the runtime virtual environment and when detecting the call information of the user mode application program to a native library functions of the user mode application program, transform an IO operation of an operating system where the user mode application program is located to be processed by the asynchronous IO model through an IO operation library function;
a wake-up unit configured to monitor whether the IO operation of the asynchronous IO model is completed through a monitoring thread function in the runtime virtual environment, and when the IO operation is completed, waking up a task that is in a wait state due to the IO operation through the monitoring thread function.

9. An electronic device, comprising:
one or more processors;
a storage device having one or more programs stored thereon;
when the one or more programs are executed by the one or more processors, cause the one or more processors to implement the method according to claim 7.

10. A computer-readable medium storing a computer program thereon, wherein the program, when executed by a processor, implements the method according to claim 7.
